# EUROPEAN PATENT SPECIFICATION

(11) **EP 0 879 776 B1**
(45) Date of publication and mention of the grant of the patent: **06.02.2002**
(21) Application number: 98108517.8
(22) Date of filing: 11.05.1998
(51) Int. Cl.: B65G 51/00, B65G 51/18

(54) **Swirl chamber in pneumatic forwarding tube systems**
Wirbelkammer für Rohrpostanlagen
Chambre à tourbillon pour transporteur pneumatique à tube

(30) Priority: 12.05.1997 US 855855
(43) Date of publication of application: 25.11.1998
(73) Proprietor: Kumar, Ajaya, New Delhi 110016 (IN)
(72) Inventor: Kumar, Ajaya, New Delhi 110016 (IN)
(74) Representative: Viering, Jentschura & Partner

(56) References cited:
- CH-A- 663 006
- US-A- 4 146 195
- PATENT ABSTRACTS OF JAPAN vol. 095, no. 004, 31 May 1995 & JP 07 010270 A (MATSUSHITA ELECTRIC WORKS LTD), 13 January 1995

## Description

This invention is in the field concerning pneumatic forwarding tube systems for forwarding transporter capsules according to the preamble of claim 1 and concerns furthermore a method for forwarding a capsule. More specifically, the invention relates to accomplishing a swerve in direction of travel of transporter capsule at ends in pneumatic forwarding tube systems.

Hitherto, in pneumatic forwarding tube systems for forwarding of transporter capsules, a desired swerve in direction of longitudinal travel of a transporter capsule, the swerve being an angular displacement of 90 degrees or any other functionally necessary angular displacement in the travel, is effected by means of the capsule performing a curvilinear motion while the capsule transits through an arcuate bend in the tube, the bend being coincident with the desired swerve. This bend cannot be in shape of a sharp turn, but curvature of the bend has necessarily to be in shape of a gradual arc, radius of curvature of the arc being adequately large to allow straight length dimension of the capsule and diametrical dimension of the capsule to pass curvilinearly through the bend in the tube.

This large radius of the bend occupies a relatively large physical area. The area is often not easily available at site of installation of the system. Often space is also expensive at the site. Therefore physical area required for achieving the swerve should be minimal.

A lateral cylindrical recess is necessary at midriff region of the capsule so as to accommodate convex inside tube surface at the bend, convexity of the inside tube surface protruding into the recess when the capsule traverses the bend.

The recess constricts transverse cross-sectional diametrical dimension of the capsule at the midriff region. As cargo carried inside the capsule is constrained to internal diameter of the capsule at the constricted midriff, the recess reduces volumetric cargo transporting capacity of the capsule. A uniform cylinder shaped cargo cannot have a diameter greater than the minimum internal diameter at the midriff, whereby cylinder capacity of the capsule is defined as diameter and length of a uniform cylinder that can be contained inside the capsule.

Cross-sectional internal diameter of the tube forwarding the capsule matches outermost diameter of the capsule which is appreciably larger than cross-sectional internal diameter at the constricted midriff of the capsule. It is easy to see that expensive space inside the tube is not well utilised for transporting cargo, the cargo being constrained to the constricted midriff. For example, in existing systems a forwarding tube of 90 mm cross-sectional internal diameter can carry a cylinder shaped cargo of 60 mm diameter only.

In conventional tube forwarding systems straight length overall dimension of the capsule has to be limited so as to allow the capsule to dimensionally pass through the bend in the tube, thereby limiting volumetric cargo transporting capacity of the system. For example, hitherto a tube internal cross-sectional diameter of 90 mm and a bend of as large as 750 mm radius can forward a capsule of only 320 mm length.

In conventional systems particular cylinder capacities of capsule can be transported if the system has a minimum diameter of the tube and a minimum radius at the bend as stated in Table 1, in mm.

**Table 1.**

| Cylinder capacity of capsule: Diameter x Length | Tube dia. | Bend radius |
|---|---|---|
| 39 x 225 | 63 | 550 |
| 60 x 245 | 90 | 650 |
| 60 x 320 | 90 | 750 |
| 80 x 245 | 110 | 650 |
| 90 x 415 | 132 | 1000 |

US-A-4 146 195 discloses a pneumatic forwarding tube system comprising a first divergent tube and a second divergent tube angularly communicating with an enlarged convergent chamber, a capsule, and means for forcing the capsule to move from the first divergent tube toward the second divergent tube, wherein the capsule is deflected by sliding along an inner wall of the chamber to perform a swerve motion of the capsule.

Device according to present invention obviates above disadvantages and also provides new and desirable features.

Objectives of the invention are, in pneumatic tube forwarding systems, to lessen physical area needed to accomplish a desired swerve in direction of longitudinal travel of transporter capsule, to diminish cross-sectional internal diameter of the tube needed for forwarding cargo of a given diameter and length, and to increase volumetric transporting capacity of capsule.

According to the invention, this is achieved by a system and a method according to the features of claims 1 and 7, respectively. Advantageous further embodiments are described in the subclaims.

Typical curvilinear longitudinal motion of the capsule at a bend in conventional pneumatic_forwarding_tube systems is substituted in pneumatic tube forwarding system of the inventiom by a complex motion of the capsule intramural of a swirl chamber, the chamber interposed at convergence of first and second divergent pneumatic tubes, the tubes proceeding from the chamber in different directions, the complex motion being predominantly a swirling swerve of the capsule wherein the capsule is caused to swirl during the swerve of the capsule Intramural of the chamber, the chamber defined by an enlargement in cross sectional tube dimension, the enlargement being dimensionally adequate to accommodate the swirling swerve of the capsule intramural of the chamber, the chamber communicating with the forwarding tubes.

Considered itemwise, objects and advantages of the invention are, in a pneumatic forwarding tube system,
(a) to provide a method means and device whereby a dimensionally smaller bending area is required to effect a desired swerve in direction of longitudinal travel of a cargo transporter capsule;
(b) to forward capsule of longer length in a given bending area dimensions than was hitherto possible;
(c) to forward capsule of larger diameter than was hitherto possible in a given bending area dimensions;
(d) to eliminate need for constricted midriff of the capsule;
(e) to eliminate need for unwieldy tube bends of large bending radii;
(f) to enhance aesthetics, substituting unsightly tube bends with compact swirl chambers in the system;
(g) to permit smaller internal diameter tubes to be used for longitudinally forwarding a cylinder capacity.

Still further objects and advantages of the invention will become apparent from a consideration of ensuing description with reference to accompanying drawings.

In the accompanying drawing figures method means and device of the invention have been illustrated by way of a non-limiting example.

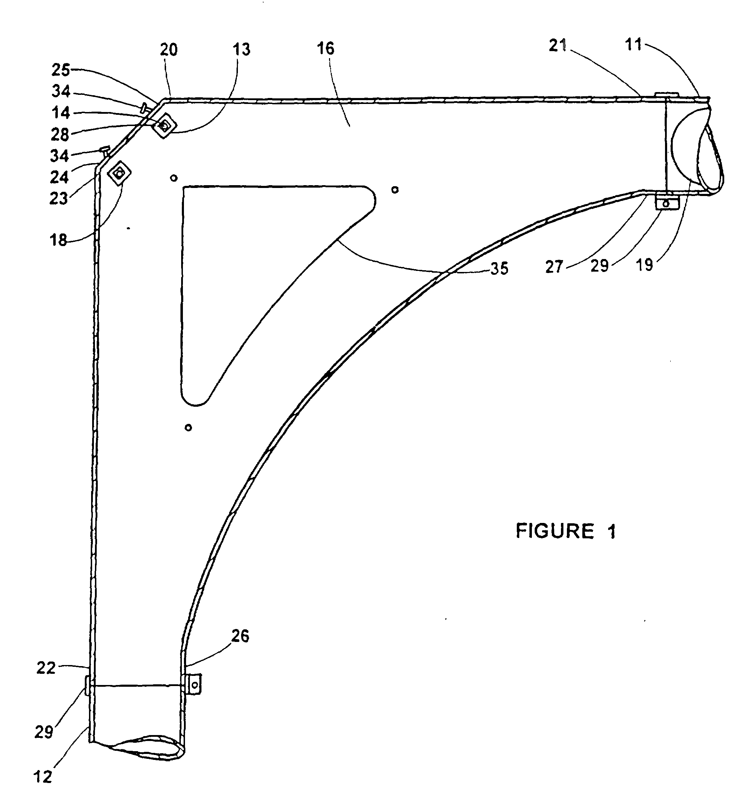

Figure 1 shows schematically in sectional view a preferred embodiment of the present invention.

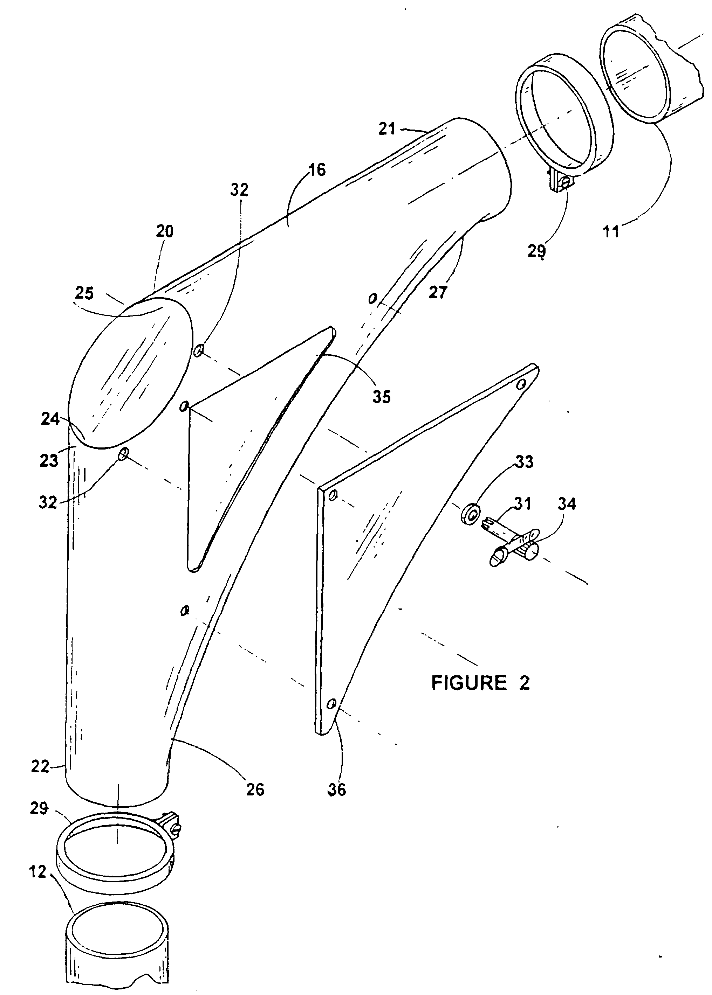

Figure 2 shows an external view of the device of Figure 1.

Figure 3 shows schematically in sectional view a transporter capsule.

Figure 4 shows capsule after emerging from pressure tube.

Figure 5 shows capsule subsequent to impact on deflecting surface.

Figure 6 shows capsule prior to entry into suction tube.

Figure 7 is an enlarged cross sectional view of deflecting surface.

### Reference numerals in the figures represent following items.

- 11: Delivering pneumatic pressure tube through which the transporter capsule emerges prior to swirling
- 12: Receiving pneumatic suction tube into which the capsule enters after swirling
- 13: Deflecting surface opposite 11
- 14: Base
- 15: Transporter capsule
- 16: Swirl chamber
- 17: Bung
- 18: Deflecting surface opposite 12
- 19: Cap
- 20-21: Semicylinder butting 11
- 22-23: Semicylinder butting 12
- 24-25: Bevel
- 26-27: Arcuate semicylinder
- 28: Bore in 14
- 29: Clamp
- 31: Shaft
- 32: Aperture
- 33: Rubber seal
- 34: Worm-wheel
- 35: Lateral opening
- 36: Sheet cover

In the cited example pneumatic suction tube 12 lies below and at right angles to pneumatic pressure tube 11. Uniform 66 mm bores of hard rigid straight imperforate circular cross section moulded polyvinyl chloride 2 mm wall thickness tubes 11 and 12 are sliding fit on outermost cylindrical surface of bung 17 on cargo transporter capsule 15.

The capsule 15 comprises a hollow rigid straight opaque polycarbonate moulded cylinder, encapped on each of its two ends by means of a screw-on 2 mm wall thickness substantially hemispherical outwardly polished smooth surfaced convex and inwardly concave hollow cap 19. Two numbers velcrow flat band 10 mm wide 1 mm radially thick bungs 17 encircle external cylindrical surface of the capsule 15 firmly attached thereto by adhesive means, each bung 17 placed 10 mm away from respective end of the cylinder. In the example the capsule 15 has external overall dimensions of 66 mm diameter and 324 mm length, and has internally 60 mm diameter and 320 mm length.

The capsule 15 carries a cargo of computer stationery weighing upto 1 Kg in the example but could be carrying other cargos like production, laboratory or medical samples, medicines, spare parts, small items, money, documents or statements.

Interposed at convergence region of the divergent tubes 11 and 12 is a 2 mm wall thickness moulded polycarbonate chamber 16 in shape of a flat enlargement of tube cross section in vertical transverse direction, whereas in horizontal transverse direction the chamber 16 has substantially same dimensions as the tubes 11, 12, the chamber 16 communicating with the tubes 11 and 12.

Straight hollow inwardly concave outwardly convex 334 mm long semicylinders 20-21 and 22-23, identical in cross sectional dimensions to corresponding cross sectional dimensions of the tubes 11,12, respectively longitudinally aligned with and respectively butting end to end with outer semicylinders of the respective tubes 11,12, shape outer mutually perpendicular upper and sideward extremities of shell of the chamber 16, junction 24-25 of the upper and sideward extremities of the shell being bevelled 48 mm in the example.

Lower inner underside of the chamber 16 is a sloping longitudinally arcuate semicylinder 26-27. Radius of curvature of the longitudinal arc 26-27 is 1.5 times overall length of the capsule 15, being in the example 486 mm, apex of the arc protruding into the underside of the chamber 16 to an extent equal to overall diameter of the capsule 15, 66 mm in the example. Cross section of the semicylinder 26-27 is semicircle of diameter equal to the diameter of the tubes 11,12, concavity of the semicircle facing the chamber 16.

Left extremity of the semicylinder 26-27 and lower extremity of the semicylinder 22-23 meet to form a transverse tubular opening of the chamber 16 identical to cross section of the tube 12, and likewise right extremeties of the semicylinders 20-21 and 26-27 meet to form a transverse tubular opening of the chamber 16 identical to cross section of the tube 11.

Transverse cross sectional end of the respective tubes 11, 12 adjacent to the chamber 16 butts end on end with the respective transverse tubular opening of the chamber 16, respective butting firmly clasped and sealed by means of a lap sleeve tube mounting clamp 29.

Lateral triangular inspection opening 35 cut out in each of both flat parallel vertical side walls of shell of the chamber 16, the openings 35 closed air tight by means of a pair of flat parallel vertical transparent polycarbonate 2 mm thick sheet covers 36, each of the covers 36 screwed on respective side walls of the shell of the chamber 16 by means of three screws tightened into threaded holes in the side wall, the screws not protruding into the chamber 16.

Meeting points of adjacent arcs and meeting lines of adjacent surfaces comprising walls of the chamber 16 are smoothened and chamfered wherever necessary in moulding of the chamber 16 so as to avoid any rough edges protruding into internal space of the chamber 16.

Overall the chamber 16 measures 400x400x74 mm. in the example.

Moulded synthetic hard rubber flat surfaced 3 mm thick sheet 13 is affixed around mild steel 10 mm cuboid base 14 by means of Araldite adhesive from M/S. Ciba AG of Switzerland. The base 14 has a toothed lateral 5 mm through bore 28 into either end of which meshes respectively a tooth ribbed 5mm diameter 4.5mm length portion of a shaft 31, each of pair of the shafts 31 sliding horizontally through a 6mm aperture 32 in respective side of the shell of the chamber 16, the aperture 32 made airtight by means of a rubber seal 33, the two shafts 31 rotatable together on axis of the bore 28 by means of a simultaneously operated pair of worm wheels 34 placed outside of the shell on either side of the shell. Top end of the flat surface 13 is positioned inside the chamber 16 opposite the tube 11 below inside upper edge of the chamber 16 at a distance of 330 mm from the butting end of the tube 11. Slope of the surface 13 with respect to axis of the tube 11 is steplessly manipulated and set between 40 and 50 degrees by means of the pair of worm wheels 34. The surface 13 functions as a deflecting surface.

In the example the manipulation is effected manually, but in an alternative configuration the manipulation can be effected by means of software operated microprocessor controlled electric motor or electromagnet.

A flat surface 18 similar to the surface 13 is likewise positioned opposite the tube 12 inside the chamber 16 and manipulated from outside the chamber 16.

Air pressure or suction for propelling the capsule 15 is furnished by means of three phase regenerative type electric motor driven centrifugal blowers delivering forwarding force related low to medium pressure air with multistage regenerative impellers with acoustic levels of less than 75 dB at 1 metre distance, envisaged with air filter, air volume regulating throttle, switch off and reversal arrangement to control the momentum with which the capsule 15 arrives at a destination in the system.

The capsule 15 is caused to perform a complex motion intramural of the chamber 16, the motion being predominantly a swirling swerve, initiated in the example by means of rebound of the leading cap 19 of the capsule 15 on the inclined deflecting surface 13. Sequence of operation is as follows.

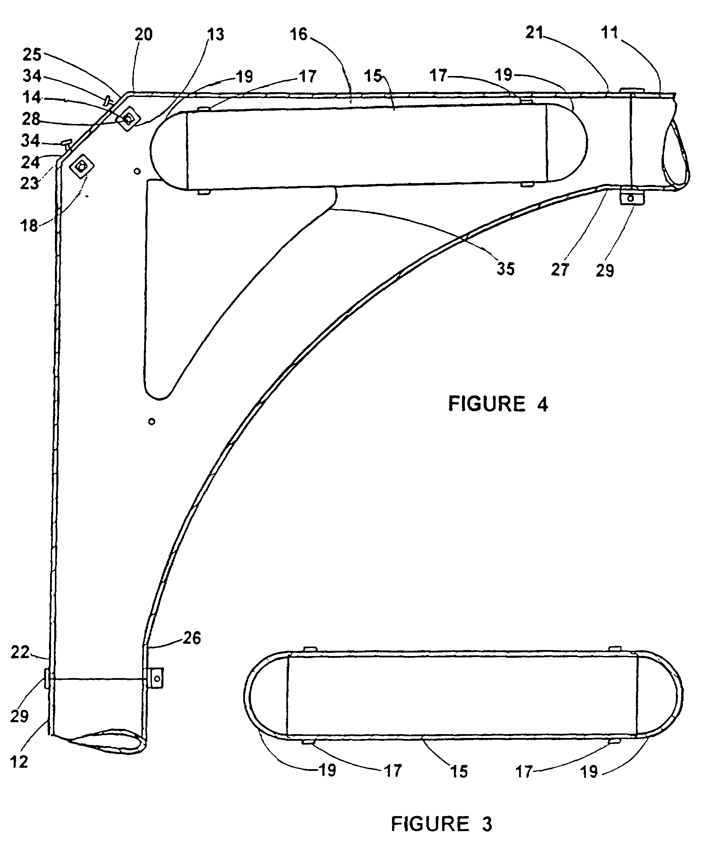

The transporter capsule 15 initially travelling at a longitudinal speed of upto 12 metres per second in the tube 11 is ejected from the tube 11 into the chamber 16. Conventional air braking and air cushion techniques are employed by means of controlling functioning of the air compressors delivering air in the system to regulate the speed at which the capsule 15 arrives into the chamber 16. In the example the capsule 15 is caused to arrive in the chamber 16 at a speed of 1 metre per second in Figure 4.

After emergence of the capsule 15 out of the tube 11 into the chamber 16 the leading cap 19 of the capsule 15 raps on the surface 13, thereby rebounding. Angularity subtended by the surface 13 to direction of initial motion of the capsule 15 is manipulated and set by means of the worm wheel 34.

Angularity of impact of the leading cap 19 on the surface 13 results in angular displacement of longitudinal motion of the leading cap 19, being about twice the angle subtended between line of incidence of the leading cap 19 on the surface 13 and normal to the surface 13 at point of impact of the leading cap 19 on the surface 13, whereby the leading cap 19 moves downwards after deflection from the surface 13, thereby causing the capsule 15 to dip and swerve.

At rear end of the capsule 15 the trailing cap 19 tends to continue moving in momentum along its initial direction of motion, so far as the trailing cap 19 does not meet with any collision. Thereby the capsule 15 as a whole swirls as it swerves intramural of the chamber 16. The capsule 15 is simultaneously pulled downwards under action of the downward movement of the leading cap 19.

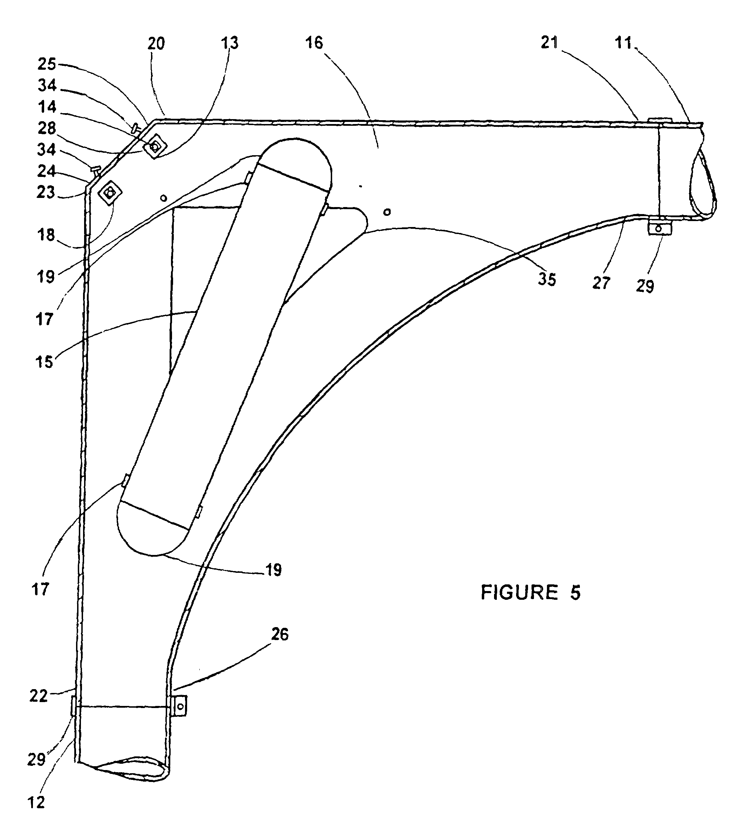

Multiple rebounds of the capsule 15 on walls inside the chamber 16 can occur, dependent upon momenta of the cargo carrying capsule 15. At each impact angle of deflection is approximately equal to angle of incidence. Position of the capsule 15 at one instant is depicted in Figure 5.

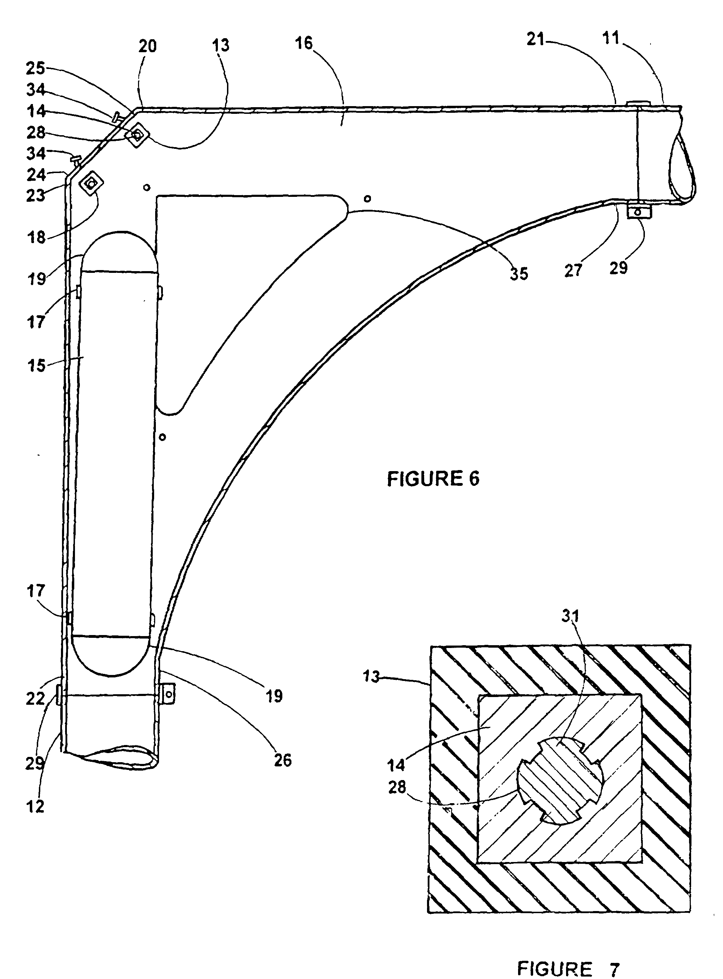

Immediately after the dip has taken place, air suction towards the tube 12 is escalated to maxima by means of controlling the compressors and the air movement in the system. Suction of the tube 12 pulls the capsule 15 towards the tube 12, and finally the capsule 15 moves, as depicted in Figure 6, along the direction of, and into, the tube 12.

Table 2 depicts dimensional achievements of the invention, in mm.

**Table 2**

| Cylinder capacity of capsule diameter x length | In conventional systems: | | | In my system: | |
|---|---|---|---|---|---|
| | Tube dia. | Bend radius | Bend area lengthxheight | Tube dia. | Bend area |
| 39 x 225 | 63 | 550 | 550 x 550 | 45 | 280x280 |
| 60 x 245 | 90 | 650 | 650 x 650 | 66 | 320x320 |
| 60 x 320 | 90 | 750 | 750 x 750 | 66 | 400x400 |
| 80 x 245 | 110 | 650 | 650 x 650 | 87 | 345x345 |
| 90 x 415 | 132 | 1000 | 1000 x1000 | 100 | 540x540 |

Accordingly the reader will see that a dimensionally smaller area is required for effecting a swerve of the transporter capsule. In case of the example the area required is only 400x400 mm whereas it was 750x 750mm in conventional systems for a cylinder capacity of 60x320 mm.

A bending area of 550x550 mm could transport a cylinder capacity of only 39x225 mm in conventional systems, whereas in my system the same bending area can transport a cylinder capacity of over 90x415 mm, which is longer, and is larger in diameter as well.

A constriction at midriff region of the capsule is not needed in my system. Diameter throughout length of the capsule and diameter of cargo carrying capacity inside the capsule are only marginally lesser than internal diameter of the forwarding tube. In a tube of 63 mm diameter a constricted midriff of 39 mm only could be forwarded in systems hitherto, whereas in my system, a comparable tube diameter of 66 mm forwards a straight cylindrical hollow capsule of uniform 60 mm internal diameter without any constricting midriff, while length forwarded improves from 225 mm in existing systems to 320 mm in my system.

Unwieldy and unsightly tube bends are avoided in my system. To cite example of a cylinder capacity of 60x245 mm. large tube bends of a bend radius of 650 mm have been substituted by compact swirl chamber of only 320x320 mm overall.

For forwarding a capsule capacity of 60x320 mm a tube diameter of 90 mm was required in conventional systems, but my system requires a tube of only 66 mm diameter.

Thus it can be seen that this invention favourably affects forwarding capacity, dimensions and costs involved in pneumatic forwarding tube systems.

Components of the device are uncomplicated and can be manufactured at low cost by the plastic moulding or sheet metal and tube industries. Also development costs are therefore low.

While my above description contains many specificities, these should not be construed as limitations on scope of the invention, but rather as exemplification of one preferred embodiment thereof. Many other variations are possible.

In lieu of the screw caps 19, the system may employ swivel caps, lockable caps or buttoned caps. Parabolic or other functionally apt shapes can substitute for the hemispherical shape of the caps 19. Exterior of the caps 19 can be surfaced with a sheet of rubber or polyurethane and the like. Spring cushions can be envisaged around cargo inside the capsule 15 to absorb shock at the rebound. The deflecting surfaces 13,18 can be curved surfaces, and also they can be mobile at moment of impact with the cap 19. Angularity of inclination of the surface 13 can be adjustable three dimensionally, so as to obtain a functionally required deflection of the capsule 15 in any direction intramural of a swirl chamber.

Wide choice of materials is available for the tubes 11,12, the chamber 16 and other components of the system. For example, stainless steel can replace plastics.

## Claims

1. A pneumatic forwarding tube system comprising a first divergent tube (11) and a second divergent tube (12) angularly communicating with an enlarged convergence chamber (16), further comprising a capsule (15) having a cap (19) **characterised by** the cap (19) being functionally apt shaped for rebounding, and means for rebounding the cap. (19) comprising an inclined deflecting surface (13) and being positioned opposite the first divergent tube (11) inside the convergence chamber (16), wherein the capsule (15) is deflected by the means for rebounding the cap (19) on the inclined deflecting surface (13) to perform an intramural swirl of the capsule (15).

2. The system according to claim 1, wherein the cap (19) has a convex shape.

3. The system according to claim 2, wherein the cap (19) has a hemispherical shape.

4. The system according to any of claims 1 to 3, wherein the means for rebounding the cap (19) is formed by a base (14). having a flat surface (13).

5. The system according to any of claims 1 to 4, wherein the means for rebounding the cap (19) comprises two inclined deflecting surfaces (13, 18) being positioned opposite the first and second divergent tubes (11, 12).

6. The system according to any of claims 1 to 5, wherein electric motor driven centrifugal blowers are provided for moving the capsule (15) from the first divergent tube (11) toward the second divergent tube (12).

7. A method for forwarding a capsule within a pneumatic forwarding tube system comprising a first divergent tube (11) and a second divergent tube (12) angularly communicating with an enlarged convergence chamber (16), a capsule (15) having a cap (19) functionally apt shaped for rebounding, and means for rebounding the cap (19) comprising an inclined deflecting surface (13) and being positioned opposite the first divergent tube (11) inside the convergence chamber (16), the method comprising the steps of:
ejecting the capsule (15) from the first divergent tube (11) into the convergence chamber (16) by the means for forcing the capsule (15) in an initial direction,
rebounding the cap (19) by the means for rebounding the cap (19) on the inclined deflecting surface (13) after emergence of the capsule (15) out of the first divergent tube (11) into the convergence chamber (16), thereby angularly displacing the capsule (15) by intramural swirling the capsule (15) in a deflected direction angular to the initial direction, and
entering the capsule (15) from the convergence chamber (16) into the second divergent tube (12).

## Patentansprüche

1. Ein Rohrpostsystem, das ein erstes Divergenzrohr (11) und ein zweites Divergenzrohr (12) enthaelt, die beide winkelförmig in eine vergrösserte Konvergenzkammer (16) münden, ausserdem eine Kapsel (15) mit einer Kappe (19), **dadurch gekennzeichnet, dass** die Kappe (19) rückprallfähig geformt ist, und ein Mittel zum Zurückprallen der Kappe (19), bestehend aus einer schrägen, innerhalb der Konvergenzkammer (16) und dem ersten Divergenzrohr (11) gegenueber befindlichen Ablenkfläche (13), wobei die Kapsel (15) durch das Mittel zum Zurückprallen der Kappe (19) von der schrägen Ablenkfläche (13) abgelenkt wird, um einen intramurellen Wirbel der Kapsel (15) auszuführen.

2. Das System nach Anspruch 1, wobei die Kappe (19) konvex geformt ist.

3. Das System nach Anspruch 2, wobei die Kappe (19) von halbkugelförmiger Gestalt ist.

4. Das System nach jeglichen Ansprüchen 1 bis 3, wobei das Mittel zum Zurückprallen der Kappe (19) aus einer Basis (14) mit einer flachen Oberfläche (13) gebildet wird.

5. Das System nach jeglichen Ansprüchen 1 bis 4, wobei sich das Mittel zum Zurückprallen der Kappe (19) aus zwei schrägen Ablenklflächen (13, 18) zusammensetzt, die sich gegenüber den ersten und zweiten Divergenzrohren (11,12) befinden.

6. Das System nach jeglichen Ansprüchen 1 bis 5, wobei zur Beförderung der Kapsel (15) vom ersten Divergenzrohr (11) zum zweiten Divergenzrohr (12) hin Elektromotorangetriebene Zentrifugalgebläse vorgesehen sind.

7. Eine Methode zum Befördern einer Kapsel innerhalb eines Rohrpostsystems,
das ein erstes Divergenzrohr (11) und ein zweites Divergenzrohr (12), die winkelförmig in eine vergrösserte Konvergenzkammer (16) münden, eine Kapsel (15) mit einer rückprallfähig gestalteten Kappe (19) und ein Mittel zum Zurückprallen der Kappe (19), das aus einer schrägen inerhalb der Konvergenzkammer (16), dem ersten Divergenzrohr (11) gegenueber befindlichen Ablenkfläche (13) besteht, enthaelt, die Methode mit den Schritten:
Das Ausstossen der Kapsel (15) aus dem ersten Divergenzrohr (11) in die Konvergenzkammer (16) durch das Mittel, das die Kapsel (15) in eine anfängliche Richtung zwingt,
das Zurückprallen der Kappe (19) durch das Mittelzum Zurückprallen der Kappe (19) von der schrägen Ablenkfläche (13) nach dem Austritt der Kapsel (15) aus dem ersten Divergenzrohr (11) in die Konvergenzkammer (16), damit die Kapsel (15) durch intramurellen Wirbel der Kapsel (15) in eine zu ihrer ursprünglichen Richtung winklig abgelengte Richtung winklig verlegen,
der Übergang der Kapsel (15) von der Konvergenzkammer (16) zum zweiten Divergenzrohr (12).

## Revendications

1. Un système tubulaire pneumatique de transport comprenant un premier tube divergent (11) et un deuxième tube divergent (12) communiquant angulairement avec une chambre de convergence élargie (16), comprenant de plus une capsule (15) dotée d'un capuchon (19) **caractérisé par** le capuchon (19) ayant une forme appropriée sur le plan fonctionnel pour rebondir, et le moyen destiné à faire rebondir le capuchon (19) comprenant une surface inclinée défléchissante (13) et étant positionnée sur la face opposée du premier tube divergent (11) à l'intérieur de la chambre de convergence (16), dans laquelle la capsule (15) est défléchie par le moyen destiné à faire rebondir le capuchon (19 ) sur la surface inclinée défléchissante (13) afin d'effectuer un tournoiement intra-muros de la capsule (15).

2. Le système, selon l'affirmation 1, dans lequel le capuchon (19) est de forme convexe.

3. Le système, selon l'affirmation 2, dans lequel le capuchon (19) est de forme hémisphérique.

4. Le système, selon les affirmations 1 à 3 quelles qu'elles soient, dans lequel le moyen destiné à faire rebondir le capuchon (19) est formé d'une base (14) ayant une surface plate (13).

5. Le système, selon les affirmations 1 à 4 quelles qu'elles soient, dans lequel le moyen destiné à faire rebondir le capuchon (19) comprend deux surfaces inclinées défléchissantes (13,18) étant positionnées sur la face opposée du premier et du deuxième tubes divergents (11,12).

6. Le système, selon les affirmations 1 à 5 quelles qu'elles soient, dans lequel des ventilateurs soufflants centriguges actionnés par des moteurs électriques sont fournis pour pousser la capsule (15) du premier tube divergent (11) vers le deuxième tube divergent (12).

7. Une méthode pour transporter une capsule à l'intérieur d'un système tubulaire pneumatique de transport comprenant un premier tube divergent (11) et un deuxième tube divergent (12) communicant angulairement avec une chambre de convergence élargie (16), une capsule (15) dotée d'un capuchon (19), ayant une forme appropriée sur le plan fonctionnel pour rebondir, et le moyen destiné à faire rebondir le capuchon (19) comprenant une surface inclinée défléchissante (13) et étant positionnée sur la face opposée du premier tube divergent (11) à l'intérieur de la chambre de convergence (16), la méthode comprenant les étapes de :
éjecter la capsule (15) du premier tube divergent (11) dans la chambre de convergence (16) par le moyen destiné à forcer la capsule (15) dans une direction initiale,
faire rebondir le capuchon (19) par le moyen destine à faire rebondir le capuchon (19) sur la surface inclinée défléchissante (13) après l'émergence de la capsule (15) du premier tube divergent (11) à l'intérieur de la chambre de convergence (16), déplaçant ainsi la capsule (15) angulairement par le tournoiement intra-muros de la capsule (15) en une direction défléchie angulaire à la direction initiale, et
faire entrer la capsule (15) de la chambre de convergence (16) dans le deuxième tube divergent (12).
